(19) Europäisches Patentamt
European Patent Office
Office européen des brevets

(11) EP 0 392 350 B1

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(51) Int Cl.[6]: **C08F 218/04**, D04H 1/64, D06M 15/29

(21) Anmeldenummer: **90106515.1**

(22) Anmeldetag: **05.04.1990**

(54) **Wässrige Kunstharzdispersionen**

Aqueous dispersions of synthetic resins

Dispersions aqueuses de résines synthétiques

(84) Benannte Vertragsstaaten:
**BE DE DK ES FR GB IT NL SE**

(30) Priorität: **12.04.1989 DE 3911943**

(43) Veröffentlichungstag der Anmeldung:
**17.10.1990 Patentblatt 1990/42**

(73) Patentinhaber: **BASF Aktiengesellschaft**
**67063 Ludwigshafen (DE)**

(72) Erfinder:
- **Angel, Maxmilian, Dr.**
  **D-6704 Mutterstadt (DE)**
- **Einwiller, Andreas, Dr.**
  **D-6800 Mannheim 31 (DE)**

(56) Entgegenhaltungen:
**EP-A- 0 019 169**
**EP-A- 0 302 588**
**US-A- 4 743 498**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 392 350 B1

## Beschreibung

Die vorliegende Erfindung betrifft wäßrige Kunstharzdispersionen, erhältlich durch einstufige Emulsionspolymerisation von Monomergemischen, bestehend aus

a) 35 bis 75 Gew.-% Vinylacetat oder Vinylpropionat (Monomer A),

b) 0,5 bis 10 Gew.-% Acrylamidoglycolsäure oder Methacrylamidoglycolsäure (Monomer B),

c) 25 bis 55 Gew.-% Ester aus einer 2 bis 5 C-Atome tragenden α,β-ethylenisch ungesättigten Monocarbonsäure und einem 1 bis 8 C-Atome tragenden Alkanol (Monomere C),

d) 0 bis 5 Gew.-% wenigstens einer 3 bis 5 C-Atome enthaltenden α,β-ethylenisch ungesättigten Mono- und/oder Dicarbonsäure und/oder deren unsubstituierten Amiden (Monomere D),

wobei die Gewichtsanteile der Monomeren A, C und D innerhalb der Grenzen so gewählt sind, daß ein nur aus diesen Monomeren aufgebautes Polymerisat eine Glastemperatur von -50 bis +60°C aufweisen würde.

Außerdem betrifft die Erfindung das Verfahren zur Herstellung dieser Dispersionen sowie die Verwendung dieser Dispersionen als Bindemittel bei der Herstellung von Vliesstoffen aus Faservliesen.

Als Vliesstoffe werden textile Flächengebilde zusammengefaßt, die durch Verfestigen lockerer Anhäufungen von Einzelfasern (Faservliesen) hergestellt werden. Die Verfestigung von Faservliesen durch Imprägnieren oder Beschichten mit wäßrigen Kunstharzdispersionen und anschließendes Abdampfen des Wassers ist allgemein bekannt. Die EP-A 19169 betrifft wäßrige Dispersionen von Copolymerisaten, die wiederkehrende Einheiten der allgemeinen Formel II

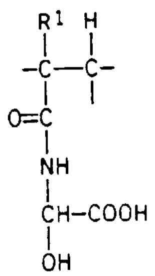

II

enthalten und zu mindestens 85 % ihres Gewichtes aus Acryl- und/oder Methacrylsäureestern 1 bis 8 C-Atome enthaltender Alkanole und/oder Vinylestern der Essig- oder Propionsäure und/oder Vinylchlorid, wobei von den genannten Monomeren bis zu 40 % ihres Gewichtes durch Acrylnitril, Styrol oder Butadien ersetzt sein können, sowie zu 0 bis 5 % ihres Gewichtes aus α,β-monoolefinisch ungesättigten 3 bis 5 C-Atome aufweisenden Mono- und/oder Dicarbonsäuren und/oder deren Amiden aufgebaut sind.

Diese Dispersionen werden als Bindemittel für die Herstellung von Vliesstoffen aus Faservliesen empfohlen, um Vliesstoffe zu erhalten, die einerseits wasch- und reinigungsbeständig sind und bei deren Verarbeitung und Gebrauch andererseits kein Formaldehyd freigesetzt wird. Beispielhaft offenbart werden nur Dispersionen von Copolymerisaten, die keine Vinylester von aliphatischen Monocarbonsäuren einpolymerisiert enthalten. Die anwendungstechnischen Eigenschaften dieser beispielhaft offenbarten Dispersionen lassen jedoch zu wünschen übrig, da mit diesen Dispersionen verfestigte Faservliese Vliesstoffe ergeben, die nicht heißsiegelfähig sind. Die Kombination von Heißsiegelfähigkeit sowie Wasch- und Reinigungsbeständigkeit ist jedoch insbesondere bei der Verwendung von Vliesstoffen im Hygienebereich von Bedeutung, wo vielfach ohne Mitverwendung zusätzlicher Klebstoffe ein Verbund von Hygienevliesstoffen mit sich oder mit anderen Substraten gefordert wird.

Die Lehse der DE-A-3 734 752 betrifft wäßrige Dispersionen von Copolymerisaten, die zu 85 bis 99,5 Gew.% aus α,β-monoolefinisch ungesättigten Carbonsäureestern mit 3 bis 12 C-Atomen, zu 0,5 bis 10 Gew.% aus den Monomeren B und zu 0 bis 5 Gew.% aus den Monomeren D aufgebaut sind, wobei bis zu 35 Gew.% der eingebauten α,β-monoolefinisch ungesättigten Carbonsäureester Monocarbonsäurevinylester sein können. Diese Dispersionen werden als Bindemittel für die Herstellung von Vliesstoffen aus Faservliesen empfohlen, um wasch- und reinigungsbeständige Vliesstoffe zu erhalten, bei deren Verarbeitung und Gebrauch kein Formaldehyd freigesetzt wird und die gleichzeitig Heißsiegelfähigkeit aufweisen. Nachteilig an diesen Dispersionen ist jedoch, daß ihre Herstellung nach einem komplexen Emulsionspolymerisationsverfahren mit zwei Stufen unterschiedlicher Monomerenzusammensetzung erfolgen muß.

Die in den Vergleichsversuchen B und K der älteren Anmeldung P 37 34 752.7 in einstufigen Emulsionspolymerisationsverfahren hergestellten wäßrigen Kunstharzdispersionen von Copolymerisaten die 25 % ihres Gewichtes Vinylacetat (Vergleichsversuch B) bzw. 9 % ihres Gewichtes Vinylpropionat (Vergleichsversuch K) einpolymerisiert enthalten, ergeben bei ihrer Anwendung als Bindemittel zum Verfestigen von Faservliesen Vliesstoffe, deren Heißsiegelfähigkeit nicht voll befriedigt.

Die Lehre der US 4 743 498 betrifft wäßrige Kunstharzdispersionen, deren Copolymerisate 50 bis 99 Mol.% Vinylacetat, 0 bis 50 Mol.% Acryl- oder Methacrylsäureester, 0 bis 10 Mol.% Acryl- oder Methacrylsäure, 1 bis 50 Mol.% Alkylacrylamidoglycolatalkylether und 0 bis 20 Mol.% Hydroxylethylacrylat und/oder Acrylamid einpolymerisiert enthalten. Diese Dispersionen werden aufgrund ihrer besonders günstigen Hitzehärtbarkeit, die ohne Formaldehydabgabe erfolgt, als Bindemittel zur Herstellung von Vliesstoffen aus Faservliesen empfohlen. Das Copolymerisat der beispielhaft offenbarten Ausführungsform (Beispiel X) enthält 15 Gew.-% Methylacrylamidoglycolatmethylether.

Aus der EP-A 281 083 sind wäßrige Kunstharzdispersionen bekannt, deren Verfilmungen eine erhöhte Blockfestigkeit aufweisen und die ebenfalls als Bindemittel in Vliesstoffen geeignet sind. Die zugehörigen Copolymerisate enthalten im wesentlichen Vinylacetat, 1 bis 20 Gew.-% Ethylen, 0,5 bis 15 Gew.-%, bezogen auf Vinylacetat, Acrylamidoglycolsäure oder verwandte Verbindungen sowie 0,1 bis 5 Gew.-% eines Acrylamids.

Aus der EP-A-302 588 sind Dispersionen bekannt, die ein Copolymerisat mit 2 bis 10 Gew.-% eines Alkylacrylamidoglycolatalkylethers enthalten und als Bindemittel für Faservliese verwendet werden.

Der vorliegenden Erfindung lag die Bereitstellung von Kunstharzdispersionen als Aufgabe zugrunde, die auf einfache Art und Weise erhältlich und insbesondere zum Verfestigen von Faservliesen geeignet sind, wobei wasch- und reinigungsbeständige Vliesstoffe erhalten werden, bei deren Verarbeitung kein Formaldehyd freigesetzt wird und die zusätzlich eine zufriedenstellende Heißsiegelfähigkeit aufweisen.

Demgemäß wurden die eingangs definierten wäßrigen Kunstharzdispersionen gefunden.

Die Monomeren B werden, bezogen auf die Gesamtmenge der Monomeren, vorzugsweise mit einem Gewichtsanteil von 2 bis 5 Gew.-% einpolymerisiert. Als Monomere C kommen insbesondere die Ester der Acryl- und der Methacrylsäure in Betracht, wobei die Acrylsäureester bevorzugt sind. Besonders bevorzugte Acrylsäureester sind Methylacrylat, Ethylacrylat, iso-Propylacrylat, n-Butylacrylat, iso-Butylacrylat sowie 2-Ethylhexylacrylat, während unter den Estern der Methacrylsäure n-Butylmethacrylat, iso-Butylmethacrylat sowie 2-Ethylhexylmethacrylat bevorzugt werden. Monomere D sind vorzugsweise Acryl- und Methacrylsäure, sowie ferner Malein- und Itaconsäure und die von diesen Carbonsäuren abgeleiteten Mono- oder Diamide. Insgesamt werden die Gewichtsanteile der Monomeren A, C und D, bezogen auf die Gesamtmenge der zu polymerisierenden Monomeren mit Hilfe der Beziehung von Fox so gewählt, daß ein nur aus diesen Monomeren aufgebautes Polymerisat eine Glastemperatur von -50 bis +60, bevorzugt -50 bis -5°C aufweisen würde. Nach Fox (T.G. Fox, Bull. Am. Phys. Soc. (Ser. II) 1, 123 [1956] gilt für die Glastemperatur von Mischpolymerisaten in guter Näherung:

$$\frac{1}{Tg} = \frac{X^1}{Tg^1} + \frac{X^2}{Tg^2} + \ldots \frac{X^n}{Tg^n},$$

wobei $X^1$, $X^2$, ..., $X^n$ die Massenbrüche der Monomeren 1, 2, ..., n und $Tg^1$, $Tg^2$, ..., $Tg^n$ die Glastemperaturen der jeweils nur aus einem der Monomeren 1, 2, ... oder n aufgebauten Polymeren in Grad Kelvin bedeuten. Die Glastemperaturen dieser Homopolymerisate der oben aufgeführten Monomeren I, II und IV sind bekannt und z.B. in J. Brandrup, E.H. Immergut, Polymer Handbook 1st Ed.J. Wiley, New York 1966 und 2nd Ed.J. Wiley, New York 1975 aufgeführt.

Die Herstellung der erfindungsgemäßen Kunstharzdispersionen erfolgt durch einstufige Polymerisation der jeweiligen Monomeren in wäßrigem Medium unter den bekannten Bedingungen der Emulsionspolymerisation in Gegenwart von wasserlöslichen radikalbildenden Initiatoren und Emulgatoren sowie gegebenenfalls in Gegenwart von Schutzkolloiden und Reglern sowie weiterer Hilfsmittel.

Als wasserlösliche Polymerisationsinitiatoren kommen vor allem Peroxide wie Wasserstoffperoxid oder kombinierte Systeme, die ein organisches Reduktionsmittel, ein Peroxid und eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II) sulfat/Wasserstoffperoxid, in Betracht. Als Emulgatoren haben sich insbesondere ethoxylierte Alkylphenole (EO-Grad: 3 bis 30, Alkylrest $C_8$ bis $C_{10}$), die Alkalimetallsalze ihrer sulfatierten Derivate sowie die Alkalimetallsalze von Alkylarylsulfonsäuren wie Natrium-n-dodecylbenzolsulfonat oder Natrium-n-tetradecylbenzolsulfonat bewährt. Die Emulsionspolymerisationstemperatur beträgt üblicherweise 0 bis 100, vorzugsweise 20 bis 90°C. Die Emulsionspolymerisation kann als Chargenprozeß oder in Form eines Zulaufverfahrens durchgeführt werden. Bevorzugt ist das Zulaufverfahren, bei dem man einen Teil des Copolymerisationsansatzes vorlegt, auf die Polymerisationstemperatur erhitzt und anschließend den Rest in getrennten Zuläufen, von denen einer die Monomeren in reiner oder in emulgierter Form enthält, kontinuierlich zuführt. Die Zufuhr der Monomeren als wäßrige Emulsion wird bevorzugt. Das zahlenmittlere Molekulargewicht des dispergierten Polymerisates beträgt im allgemeinen $5 \cdot 10^3$ bis 5

$\cdot 10^6$, bevorzugt $10^5$ bis $2 \cdot 10^6$. Mit Vorteil werden die erfindungsgemäßen wäßrigen Dispersionen mit einem Feststoffgehalt von 35 bis 65 Gew.% hergestellt. Sie eignen sich insbesondere als Bindemittel für die Herstellung von Vliesstoffen aus Faservliesen, denen sie Heißsiegelfähigkeit sowie Wasch- und Reinigungsbeständigkeit, d.h. insbesondere eine hohe Naßfestigkeit, und weichen Griff verleihen. Bei ihrem Einsatz zum Binden von Faservliesen werden vorzugsweise erfindungsgemäße Dispersionen mit einem Feststoffgehalt von 10 bis 30 Gew.% verwendet.

Dabei können als Hilfsmittel u.a. äußere Weichmacher, inerte Füllstoffe, Verdickungsmittel, Farbstoffe, Mittel zur Erhöhung der Alterungsbeständigkeit oder Flammschutzmittel in den üblichen Mengen mitverwendet werden. Die erfindungsgemäßen Kunstharzdispersionen eigenen sich sowohl zum Verfestigen von Faservliesen aus Naturfasern wie Pflanzen-, Tier- oder Mineralfasern, als auch von Faservliesen aus synthetischen Fasern, wobei die Faservliese genadelt, gewalzt, geschrumpft und/oder mit Garnen verstärkt sein können. Beispiele sind Fasern aus Baumwolle, Wolle, Polyamiden, Polyestern, Polyolefinen, synthetischer Cellulose (Viscose), Steinwolle oder Asbestfasern. Außerdem eignen sich die erfindungsgemäßen Kunstharzdispersionen zum Imprägnieren und Beschichten von gewobenen und/oder einen Maschenaufbau aufweisenden flächigen textilen Gebilden, als Bindemittel für Textildruckpasten und Papierstreichmassen, als überzugsmittel für Folien sowie als Ausrüstungsmittel für Textilien.

Die erfindungsgemäßen Dispersionen können bei ihrem Einsatz als Bindemittel für Faservliese in an sich bekannter Weise z.B. durch Tränken, Sprühen, Streichen oder Bedrucken aufgebracht werden. Danach wird in der Regel das überschüssige Bindemittel abgetrennt, z.B. durch Abquetschen zwischen zwei gegenläufigen Walzen, das bindemittelhaltige Faservlies getrocknet und anschließend noch einige Minuten unter Hitze gehalten, wobei im allgemeinen Temperaturen von 110 bis 200, vorzugsweise von 120 bis 170°C angewandt werden. Der Bindemittelanteil im Vliesstoff beträgt üblicherweise 20 bis 60, bevorzugt 20 bis 35 Gew.% (wasserfrei gerechnet).

Beispiele

Beispiel 1

Herstellung verschiedener wäßriger Kunstharzdispersionen

Dispersion 1

Ein Gemisch aus 390 g Wasser, 9,6 g einer 30 gew.%igen wäßrigen Wasserstoffperoxid-Lösung und 48 g einer Monomeremulsion D1 wurde auf die Polymerisationstemperatur von 60°C erhitzt und anschließend auf einmal mit 10 g einer reduzierenden Lösung von 2,8 g Ascorbinsäure und 0,02 g Eisen(II)sulfat in 200 g Wasser versetzt. Danach wurden unter Aufrechterhaltung der Polymerisationstemperatur innerhalb von 2 h weitere 2377 g der Monomeremulsion D1 und der Rest der reduzierenden Lösung kontinuierlich zugeführt und nach beendeter Zufuhr wurde 2 h nachpolymerisiert. Der Feststoffgehalt der erhaltenen Dispersion betrug 48 Gew.%.

| | | |
|---|---|---|
| Zusammensetzung von D1: | 33,6 Gew.% | Wasser |
| | 29,7 (50)* Gew.% | Vinylpropionat |
| | 28,2 (47,5) Gew.% | Ethylacrylat |
| | 1,5 (2,5) Gew.% | Acrylamidoglycolsäure |
| | 4,4 Gew.% | Emulgator I und |
| | 2,6 Gew.% | Emulgator II |

Emulgator I: 20 gew.%ige wäßrige Lösung von ethoxyliertem p-Isooctylphenol (EO-Grad: 25)

Emulgator II: 35 gew.%ige wäßrige Lösung des Na-Salzes von ethoxyliertem (EO-Grad 25) und sulfatiertem p-Isooctylphenol

*Die Angaben in Klammern beziehen sich auf die reine Monomerzusammensetzung.

Dispersion 2

Wie Dispersion 1, jedoch mit folgenden Unterschieden: An Stelle der Monomeremulsion D1 wurde eine Monomeremulsion D2 der folgenden Zusammensetzung eingesetzt:

| | |
|---|---|
| 33,6 Gew.% | Wasser |

(fortgesetzt)

| | |
|---|---|
| 25,2 (42,5) Gew.% | Vinylacetat |
| 32,7 (55,0) Gew.% | n-Butylacrylat |
| 1,5 (2,5) Gew.% | Acrylamidoglycolsäure |
| 4,4 Gew.% | Emulgator I und |
| 2,6 Gew.% | Emulgator II |

Dispersion 3

Wie Dispersion 1, jedoch mit folgenden Unterschieden: Die Vorlage bestand aus 211 g Wasser, 4,5 g der Wasserstoffperoxid-Lösung und 3 g einer Monomeremulsion D3. Es wurde zunächst nur 1 g einer reduzierenden Lösung von 1,35 g Ascorbinsäure und 0,008 g Eisen(II) sulfat in 100 g Wasser zugegeben, die Menge der kontinuierlich zugeführten Monomermischung D3 betrug 1207 g und die Zusammensetzung von D3 war:

| | |
|---|---|
| 37,6 Gew.% | Wasser |
| 39,3 (70,5) Gew.% | Vinylacetat |
| 14,0 (25,0) Gew.% | Ethylacrylat |
| 2,5 (4,5) Gew.% | Acrylamidoglycolsäure |
| 4,2 Gew.% | Emulgator I und |
| 2,4 Gew.% | Emulgator II |

Der Feststoffgehalt der erhaltenen Dispersion betrug 45 Gew.%.

Dispersion 4

Wie Dispersion 1, jedoch mit folgenden Unterschieden: Die Vorlage bestand aus 381 g Wasser, 10 g der Wasserstoffperoxid-Lösung und 48 g einer Monomeremulsion D4. Die Menge der kontinuierlich zugeführten Monomermischung D4 betrug 2363 g und die Zusammensetzung von D4 war:

| | |
|---|---|
| 31,6 Gew.% | Wasser |
| 31,1 (50,0) Gew.% | Vinylpropionat |
| 15,6 (25,0) Gew.% | Ethylacrylat |
| 14,0 (22,5) Gew.% | n-Butylacrylat |
| 1,5 (2,5) Gew.% | Acrylamidoglycolsäure und |
| 6,2 Gew.% | einer 15 gew.%igen wäßrigen Lösung eines Gemisches aus gleichen Teilen Na-n-dodecylbenzolsulfonat und Na-n-tetradecylbenzolsulfonat |

Der Feststoffgehalt der erhaltenen Dispersion betrug 50 Gew.%.

Beispiel 2

Untersuchung verschieden gebundener Faservliese

A) Ein längsgelegtes (Faserorientierung bevorzugt in einer Richtung, der Längsrichtung) Faservlies aus Polyester-Fasern der Länge 60 mm und einer durchschnittlichen Faserfeinheit von 3,3 dtex (1 dtex entspricht einer Fasermasse von $1 \cdot 10^{-4}$g bei einer Faserlänge von 1 m) wurde in unabhängigen Versuchen mit den Dispersionen 1 bis 4, die zuvor auf einen einheitlichen Feststoffgehalt von 20 Gew.% verdünnt worden waren, getränkt, zur Abtrennung des überschüssigen Dispersionsanteils zwischen zwei gegenläufige Walzen gebracht und danach 4 min einer Temperatur von 150°C ausgesetzt. Der Bindemittelanteil der so erhaltenen Vliesstoffe betrug, bei einem Flächenendgewicht von 50 g/m$^2$, in allen Fällen 33 Gew.%. Anschließend wurden 50 mm breite Streifen dieser Vliesstoffe bei einer freien Einspannlänge von 10 cm trocken, wassernaß und nach Heißsiegelung (Siegelbedingungen: 2 sec, 170°C, 6 bar, Siegelfläche 5 cm$^2$, Siegelung Unterseite eines Streifens gegen Oberseite eines Streifens) zur Ermittlung der Höchstzugkraft (parallel zur Faservorzugsrichtung) in Analogie zur DIN 53 857 einem Streifenzugversuch ausgesetzt. Die Ergebnisse gehen aus Tabelle 1 hervor. Tabelle 1 enthält zusätzlich die Ergebnisse von 3 Vergleichsversuchen V1 bis V3, bei denen an Stelle der erfindungsgemäßen Dispersionen 20 gew.

%ige Kunstharzdispersionen eingesetzt wurden, die durch Verdünnen von Dispersionen gemäß Vergleichsbeispiel B (V1) und K (V2) der älteren Anmeldung P 37 34 752.7, sowie durch Verdünnen einer Dispersion gemäß Herstellungsbeispiel 4 aus der EP 19169 (V3) erhalten worden waren.

Tabelle 1

| | | Höchstzugkraft [N] | |
|---|---|---|---|
| | trocken | wassernaß | nach Siegelung |
| Dispersion 1 | 107 | 50 | 11 |
| Dispersion 2 | 102 | 46 | 12 |
| Dispersion 3 | 117 | 54 | 21 |
| Dispersion 4 | 86 | 54 | 11 |
| V 1 | 82 | 41 | 1,9 |
| V 2 | 68 | 40 | 2,0 |
| V 3 | 97 | 55 | 0 |

B) Wie A), das Faservlies bestand jedoch aus Viscose-Fasern der Länge 40 mm und einer durchschnittlichen Faserfeinheit von 2,8 dtex. Die Ergebnisse zeigt Tabelle 2.

| | | Höchstzugkraft [N] | |
|---|---|---|---|
| | trocken | wassernaß | nach Siegelung |
| Dispersion 1 | 89 | 46 | 11 |
| Dispersion 2 | 101 | 47 | 13 |
| Dispersion 3 | 98 | 37 | 7 |
| Dispersion 4 | 105 | 44 | 7 |
| V 1 | 73 | 35 | 1,2 |
| V 2 | 74 | 35 | 1 |
| V 3 | 85 | 39 | 0 |

**Patentansprüche**

**1.** Wäßrige Kunstharzdispersion, erhältlich durch einstufige Emulsionspolymerisation von Monomergemischen, bestehend aus

a) 35 bis 75 Gew.-% Vinylacetat oder Vinylpropionat (Monomer A),

b) 0,5 bis 10 Gew.-% Acrylamidoglycolsäure oder Methacrylamidoglycolsäure (Monomer B),

c) 25 bis 55 Gew.-% Ester aus einer 2 bis 5 C-Atome tragenden $\alpha,\beta$-ethylenisch ungesättigten Monocarbonsäure und einem 1 bis 8 C-Atome tragenden Alkohol (Monomere C),

d) 0 bis 5 Gew.-% wenigstens einer 3 bis 5 C-Atome enthaltenden $\alpha,\beta$-ethylenisch ungesättigten Mono- und/oder Dicarbonsäure und/oder deren unsubstituierten Amiden (Monomere D),

wobei die Gewichtsanteile der Monomeren A, C und D innerhalb der Grenzen so gewählt sind, daß ein nur aus diesen Monomeren aufgebautes Polymerisat eine Glastemperatur von -50 bis +60°C aufweisen würde.

**2.** Verfahren zur Herstellung von wäßrigen Kunstharzdispersionen gemäß Anspruch 1, dadurch gekennzeichnet, daß die Monomeren durch einstufige Emulsionspolymerisation copolymerisiert werden.

**3.** Verwendung von wäßrigen Kunstharzdispersionen gemäß Anspruch 1 als Bindemittel zur Herstellung von Vliesstoffen aus Faservliesen.

## Claims

1. An aqueous synthetic resin dispersion, obtainable by single-stage emulsion polymerization of a monomer mixture consisting of

   a) from 35 to 75% by weight of vinyl acetate or vinyl propionate (monomer A),
   b) from 0.5 to 10% by weight of acrylamidoglycolic acid or methacrylamidoglycolic acid (monomer B),
   c) from 25 to 55% by weight of esters of an α,β-ethylenically unsaturated monocarboxylic acid of 2 to 5 carbon atoms and an alcohol of 1 to 8 carbon atoms (monomers C),
   d) from 0 to 5% by weight of at least one α,β-ethylenically unsaturated mono- and/or dicarboxylic acid of 3 to 5 carbon atoms and/or unsubstituted amides thereof (monomers D),

   the amounts by weight of the monomers A, C and D being chosen within the limits so that a polymer composed only of these monomers would have a glass transition temperature of from -50 to +60°C.

2. A process for the preparation of an aqueous synthetic resin dispersion as claimed in claim 1, wherein the monomers are copolymerized by single-stage emulsion polymerization.

3. Use of an aqueous synthetic resin dispersion as claimed in claim 1 as a binder for the preparation of nonwovens from laid webs.

## Revendications

1. Dispersion aqueuse de résine synthétique, obtenue par polymérisation en émulsion en une seule étape de mélanges de monomères composés de

   a) 35 à 75% en poids d'acétate de vinyle ou de propionate de vinyle (monomère A),
   b) 0,5 à 10% en poids d'acide acrylamidoglycolique ou d'acide méthacrylamidoglycolique (monomère B),
   c) 25 à 55% en poids d'ester d'un acide monocarboxylique à insaturation α,β-éthylénique comportant 2 à 5 atomes de carbone et d'un alcool comportant 1 à 8 atomes de carbone (monomère C),
   d) 0 à 5% en poids d'au moins un acide mono- et/ou dicarboxylique à insaturation α,β-éthylénique contenant 3 à 5 atomes de carbone et/ou d'amides non substitués de celui-ci (monomère D),

   les proportions en poids des monomères A, C et D étant choisies dans des limites telles qu'un polymère uniquement composé de ces monomères présenterait une température de transition vitreuse de -50 à +60°C.

2. Procédé de préparation de dispersions aqueuses de résines synthétiques selon la revendication 1, caractérisé en ce que les monomères sont copolymérisés par polymérisation en émulsion en une seule étape.

3. Utilisation de dispersions aqueuses de résines synthétiques selon la revendication 1 comme liant pour la fabrication de non-tissés à partir de nappes de fibres.